# EUROPEAN PATENT SPECIFICATION

(11) **EP 1 913 731 B1**
(45) Date of publication and mention of the grant of the patent: **25.02.2015**
(21) Application number: 06800756.6
(22) Date of filing: 03.08.2006
(51) Int. Cl.: H04L 12/751, H04L 12/723

(54) **Method and apparatus for enabling routing of label switched data packets**
Verfahren und Vorrichtung zur Routingaktivierung von Label-Switch-Datenpaketen
Procédé et dispositif pour permettre le routage de paquets de données commutes par étiquettes

(30) Priority: 08.08.2005 US 200204
(43) Date of publication of application: 23.04.2008
(73) Proprietor: Cisco Technology, Inc., San Jose, CA 95134-1706 (US)
(72) Inventor: SZCZESNIAK, Mark, San Jose, California 95134 (US); LE FAUCHEUR, Francois Laurent, F-06560 Valbonne (FR); POULIN, Johnny Dean, San Jose, California 95134 (US)
(74) Representative: Kazi, Ilya
(86) International application number: PCT/US2006/030441
(87) International publication number: WO 2007/019309

(56) References cited:
- US-B1- 6 363 319
- US-B1- 6 408 001
- ADAMOVIC ET AL: "A NEW TRAFFIC ENGINEERING APPROACH FOR IP NETWORKS" CSNDSP 2004, [Online] 2004, pages 1-7, XP002558811 Retrieved from the Internet: URL:http://www.ncl.ac.uk/csndsp/> [retrieved on 2009-12-03]
- PSENAK S MIRTORABI A ROY L NGUYEN P PILLAY-ESNAULT CISCO SYSTEMS P: "Multi-Topology (MT) Routing in OSPF; draft-ietf-ospf-mt-04.txt" IETF STANDARD-WORKING-DRAFT, INTERNET ENGINEERING TASK FORCE, IETF, CH, vol. ospf, no. 4, 20 April 2005 (2005-04-20), XP015038767 ISSN: 0000-0004
- TONY PRZYGIENDA (REDBACK) NAIMING SHEN (REDBACK) NISCHAL SHETH (JUNIPER): "M-ISIS: Multi Topology Routing in IS-IS; draft-ietf-isis-wg-multi-top ology-03.txt" IETF STANDARD-WORKING-DRAFT, INTERNET ENGINEERING TASK FORCE, IETF, CH, vol. isis, no. 3, 1 April 2002 (2002-04-01), XP015021670 ISSN: 0000-0004
- M.WARD: '802.1S solves architecture issues' NETWORK WORLD, [Online] 04 August 2003, pages 1 - 2, XP000863984 Retrieved from the Internet: <URL:http://www.networkworld.com/cgi-bin/ma ilto/x.cgi?pagetosend=/news/tech/2003/0804t echupdate.html&pagename=/news/tech/2003/080 4techupdate.html&pageurl=http://www.network world.com/news/tech/2003/0804techupdate.htm l&site=printpage&nsdr=n> [retrieved on 2011-06-27]
- ROSEN CISCO SYSTEMS E ET AL: "Multiprotocol Label Switching Architecture; rfc3031.txt", 20010101, 1 January 2001 (2001-01-01), XP015008814, ISSN: 0000-0003
- ROSEN D TAPPAN G FEDORKOW CISCO SYSTEMS E ET AL: "MPLS Label Stack Encoding; rfc3032.txt", 20010101, 1 January 2001 (2001-01-01), XP015008815, ISSN: 0000-0003
- THOMAS CISCO SYSTEMS B ET AL: "LDP Applicability; rfc3037.txt", 20010101, 1 January 2001 (2001-01-01), XP015008820, ISSN: 0000-0003
- JAMOUSSI B ET AL: "Constraint-Based LSP Setup using LDP; rfc3212.txt", 20020101, 1 January 2002 (2002-01-01), XP015008991, ISSN: 0000-0003

## Description

### FIELD OF THE INVENTION

The present invention generally relates to enabling routing of data packets. The invention relates more specifically to a method and apparatus for enabling routing of label switched data packets.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

In computer networks such as the Internet, packets of data are sent from a source to a destination via a network of elements including links (communication paths such as telephone or optical lines) and nodes (for example, routers directing the packet along one or more of a plurality of links connected to it) according to one of various routing protocols.

In some instances networks are capable of supporting multi-topology routing. Multi-topology routing is described in "MT-OSPF: Multi-topology (MT) routing in OSPF" by Psenak et al, which is available at the time of writing from the file "draft-ietf-ospf-mt-04.txt" in the directory "internet-drafts" of the domain "ietf.org" on the World Wide Web.

In multi-topology routing one or more additional topologies is overlaid on a base or default topology and different classes of data are assigned to different topologies and classified accordingly during the forwarding operation. For example the base or default topology will be the entire network and an additional topology will be a subset of the default topology. It will be appreciated that the physical components of the network are common to both topologies but that for various reasons it may be desirable to assign certain classes of traffic to only a certain subset of the entire network as a result of which the multi-topology concept provides a useful approach to providing this functionality. Alternatively, links may have different metric values in different topologies (and all links may be included in all topologies).

One example of the use of multiple topologies is where one class of data requires low latency links, for example Voice over Internet Protocol (VoIP) data. As a result such data may be sent preferably via physical landlines rather than, for example, high latency links such as satellite links. As a result an additional topology is defined as all low latency links on the network and VoIP data packets are assigned to the additional topology. Another example is security-critical traffic which may be assigned to an additional topology of non-radiative links. Further possible examples are file transfer protocol (FTP) or SMTP (simple mail transfer protocol) traffic which can be assigned to an additional topology comprising high latency links, Internet Protocol version 4 (IPv4) versus Internet Protocol version 6 (IPv6) traffic which may be assigned to different topologies or data to be distinguished by the quality of service (QoS) assigned to it.

Multi-topology routing is supported in the context, for example, of internet protocol (IP) link state routing protocols such as OSPF and IS-IS. The link state protocol relies on a routing algorithm resident at each node. Each node on the network advertises, throughout the network, links to neighboring nodes and provides a cost associated with each link, which can be based on any appropriate metric such as link bandwidth or delay and is typically expressed as an integer value. A link may have an asymmetric cost, that is, the cost in the direction AB along a link may be different from the cost in a direction BA. Based on the advertised information in the form of a link state packet (LSP) each node constructs a link state database (LSDB), which is a map of the entire network topology, and from that constructs generally a single optimum route to each available node based on an appropriate algorithm such as, for example, a shortest path first (SPF) algorithm. As a result a "spanning tree" (SPT) is constructed, rooted at the node and showing an optimum path including intermediate nodes to each available destination node. The results of the SPF are stored in a routing information base (RIB) and based on these results the forwarding information base (FIB) or forwarding table is updated to control forwarding of packets appropriately. When there is a network change an advertisement representing the change is flooded through the network by each node adjacent the change, each node receiving the advertisement sending it to each adjacent node.

As a result, when a data packet for a destination node arrives at a node (the "first node"), the first node identifies the optimum route to that destination and forwards the packet to the next node along that route. The next node repeats this step and so forth.

In the case of MTR, each advertisement is topology specific and includes a field identifying the topology (field MT-ID). As a result each router runs a separate SPF for each MT-ID and, from that, constructs a separate RIB and corresponding FIB. When a packet arrives at a multi-topology capable router it is classified in order to identify its MT-ID and the relevant next hop derived from the corresponding RIB/FIB.

However no solutions are currently proposed for supporting multi-topology routing in the multi protocol switching (MPLS) forwarding environment.

MPLS is a protocol that is well known to the skilled reader and which is described in document "Multi Protocol Label Switching Architecture" which is available at the time of writing on the file "rfc3031.txt" in the directory "rfc" of the domain "ietf.org" on the World Wide Web ("*RFC3031*"). According to MPLS, a complete path for a source-destination pair is established, and values required for forwarding a packet between adjacent routers in the path together with headers or "labels" are pre-pended to the packet. The labels are used to direct the packet to the correct interface and next hop. The labels precede the IP or other header allowing smaller outer headers.

The path for the source-destination pair, termed a Label Switched Path (LSP) can be established according to various different approaches. One such approach is Label Distribution Protocol (LDP) in which each router in the path sends its label to an adjacent router on the path as determined from its IP routing table. Alternatively Resource Reservation Protocol (RSVP) can be invoked in which case, for example, a network administrator can engineer a path, providing strict source routing.

For each LSP created, a forwarding equivalent class (FEC) is associated with the path specifying which packets are mapped to it. For example all packets for destinations served by a given prefix may be assigned to the same FEC. Assignment of the packet to an FEC is carried out at the ingress router to the MPLS network which attaches the appropriate label for the packet for the next hop router in the MPLS path.

In MPLS therefore adjacent routers swap ingress and egress labels. Adjacent routers, in particular, bind a label to an FEC and advertise the binding information to the adjacent router such that when a packet is received at the router with the advertised label as ingress label, the router is able to identify the FEC and replace the ingress label with an egress label for that FEC which it, in turn, has been received from the next downstream router. The ingress and egress label for a given FEC are then associated with one another in a label forwarding information base (LFIB) together with the next hop for that FEC derived from the RIB.

However the MPLS control plane and MPLS forwarding plane are not currently MTR-aware and therefore cannot take advantage of MTR class based routing.

A paper entitled "A New Traffic Engineering Approach for IP Networks" by Ljiljana Adamovic and Martin Collier describes a forwarding protocol providing connectionless packet forwarding in an area with no more than 256 routers. In this subIP procedure, a unique per subIP area 1 byte subIP router address is assigned to each area router which bounds the subIP area size 2256 routers. When a packet enters the area the ingress router determines the last area router on the packet's way to destination, the egress area router, based on the IP destination address in the packets IP header and the information collected by routing protocol. The ingress and egress router may be considered as the source and destination of the packet within the subIP area. Several virtual topologies based on the physical topology information may be defined. Each topology is marked as a different level topology and each area router will have a separate next hop field in its routing table for each topology. A 4 bit control field in the subIP header, set by the ingress router, is used to indicate which of the defined topologies should be used on packet forwarding. The present invention is defined by the appended independent claims.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is a representation of a network illustrating a method of enabling routing as described herein;
FIG. 2 is a flow diagram illustrating steps performed according to the method at a label advertising router;
FIG. 3 is a flow diagram illustrating the steps performed according to the method at a label advertisement receiving router;
FIG. 4a shows an RIB at a router for a first topology;
FIG. 4b shows an RIB at the same router for a second topology;
FIG. 5 shows an LFIB at a router;
FIG. 6 is a flow diagram illustrating a forwarding operation at a router according to the method described herein; and
FIG. 7 is a block diagram that illustrates a computer system upon which a method may be implemented.

### DETAILED DESCRIPTION OF THE PREFERRED EMBODIMENT

A method and apparatus for enabling routing of label switched data packets is described. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

Embodiments are described herein according to the following outline:
1.0 General Overview
2.0 Structural and Functional Overview
3.0 Method of Enabling Routing of Label Switched Data Packets
4.0 Implementation Mechanisms-Hardware Overview
5.0 Extensions and Alternatives

### 1.0 GENERAL OVERVIEW

The needs identified in the foregoing Background, and other needs and objects that will become apparent for the following description, are achieved in the present invention, which comprises, in one aspect, a method of enabling routing of label switched data packets in a data communications network comprising a plurality of nodes and supporting multiple topologies. The method comprises processing a label value advertisement comprising an association between a label value and a corresponding forwarding class and topology, and carrying out a routing enabling step in relation to the label value advertisement.

In other aspects, the invention encompasses a computer apparatus and a computer-readable medium configured to carry out the foregoing steps.

### 2.0 STRUCTURAL AND FUNCTIONAL OVERVIEW

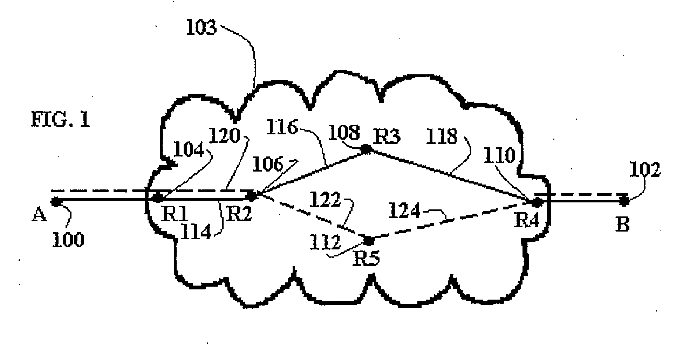

In overview a method for enabling routing of label switched data packets can be understood with reference to FIG. 1 which depicts an illustrative network diagram to which the method is applied. The network includes source and destination nodes A, B, reference number 100, 102 and an MPLS network generally designated 103 including an ingress router R1, reference number 104, and an egress router R4, reference numeral 110 together with additional routers R2, R3 and R5, reference numerals 106, 108, 112 respectively. The network supports a first topology (topology 1) shown in a solid line providing a path along R1, R2, R3, R4 via links 114, 116, 118. The network further supports a second topology (topology 2) shown in dotted lines providing a path along R1, R2, R5, R4 via links 120, 122, 124. For example the first topology may be for secure traffic only and hence comprise non-radiative links only whereas the second topology may be for time critical traffic such as VoIP and comprise the fastest available links. As a result it is desirable to ensure that data packets are classified and forwarded according to the appropriate topology.

According to the method described herein, to enable routing of label switched packets such as MPLS packets per topology an advertising node acting as enabling node sends a label value advertisement, in the form of a binding comprising an association between a label and a corresponding forwarding class, such as an FEC, and topology. For example an enabling node such as router R3 may construct such an advertisement for receiving node R2 for an FEC corresponding to packets for destination B, together with the corresponding first topology identifier. Similarly node R5 sends to node R2 an advertisement with its label and a binding with the FEC for B and the corresponding second topology. Prior to sending, as a routing enabling step, the advertisement each router populates its forwarding table, i.e. LFIB with the respective label as ingress label together with the next hop for the FEC and topology ID and the corresponding egress label, that is, the label received for that FEC from the next hop router.

Similarly the upstream router, in this case R2, will, as a routing enabling step, populate its LFIB with its ingress labels for each FEC and topology together with the corresponding egress labels and next hops. In particular at router R2, different labels are assigned for the respective <FEC, MT-ID> tuple. Accordingly upon arrival of a packet from R1 with an FEC and topology dependence, the appropriate egress label is added and the packet is forwarded to the corresponding topology.

As a result a single LFIB is established and maintained as with existing MTR-unaware MPLS. By assigning one different label per topology, MTR-aware distribution is enabled, the LFIB being populated by combining information from MTR-aware routing protocols and the MTR-aware label distribution protocol described here allowing the use of existing MTR-unaware MPLS label switching data path mechanisms whereby a received MPLS packet is simply forwarded by a direct label lookup into a single LFIB. Accordingly traffic can be forwarded through the MPLS cloud along class-based paths established by MTR routing without modification of the MPLS data path, that is the label switching operation and hence without hardware/firmware upgrade, simply from population of a single LFIB from multiple RIBs using label binding per topology. Classification of the packet to identify the correct topology is carried out only at the ingress router which then switches the packet into the relevant FEC and forwards it using the label switching mechanism described herein.

### 3.0 METHOD OF ENABLING ROUTING OF LABEL SWITCHED DATA PACKETS

For purposes of illustrating a clear example, the method described herein in some instances refers to its applicability in relation to a network of the type shown in FIG. 1. However the method described herein is not limited to the context of FIG. 1 and may be applied to any appropriate multi-topology routing domain.

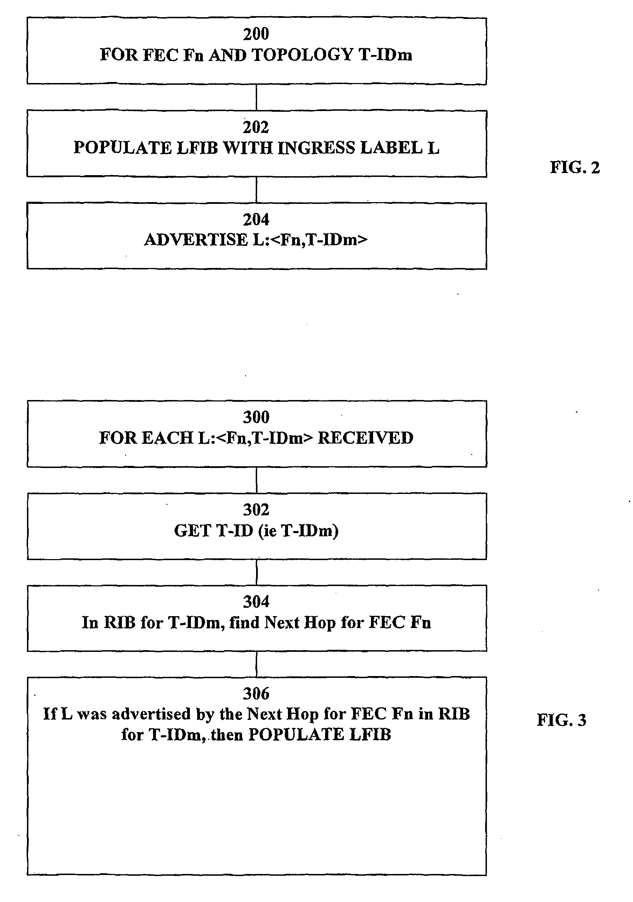

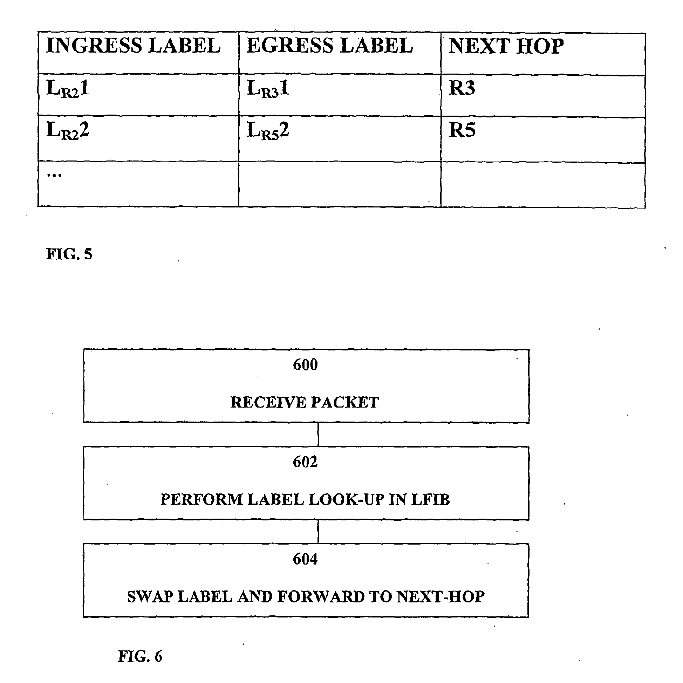

FIGS. 2 and 3 show flow diagrams illustrating in more detail the steps involved in implementing the method at an enabling router comprising a label advertising router and a label advertisement receiving router respectively. This can be further understood with reference to FIG. 5 which is a diagram showing information maintained in the LFIB of router R2. Referring firstly to FIG. 2, the steps carried out at router R2 in advertising its label bindings according to the method described herein can be seen for each FEC Fn and topology T-IDm at step 200. For example where FEC-F1 comprises all packets for destination B and T-ID1 relates to the first topology in step 202 router R2 populates its LFIB with a first ingress label L_{R2}1. Similarly for the same FEC F1 and second topology T-ID2 router R2 populates the LFIB with a second label L_{R2}2. Typically subsequent to population of the LFIB with each ingress label, the router advertises its respective labels at step 204.

Turning now to FIG. 3, router R2 additionally receives binding advertisements from each of its downstream neighbors, at step 300, for each FEC and topology. For example the labels L_{R3}1 and L_{R3}2 received from R3 have respective binding <F1, T-ID1>, i.e.FEC F1 and topology 1 and <F1,T-ID2> i.e. FEC F1 and topology 2. Similarly the labels L_{R5}1 and L_{R5}2) received from R5 have respective bindings <F1, T-ID1> and <F1, T-ID2>.

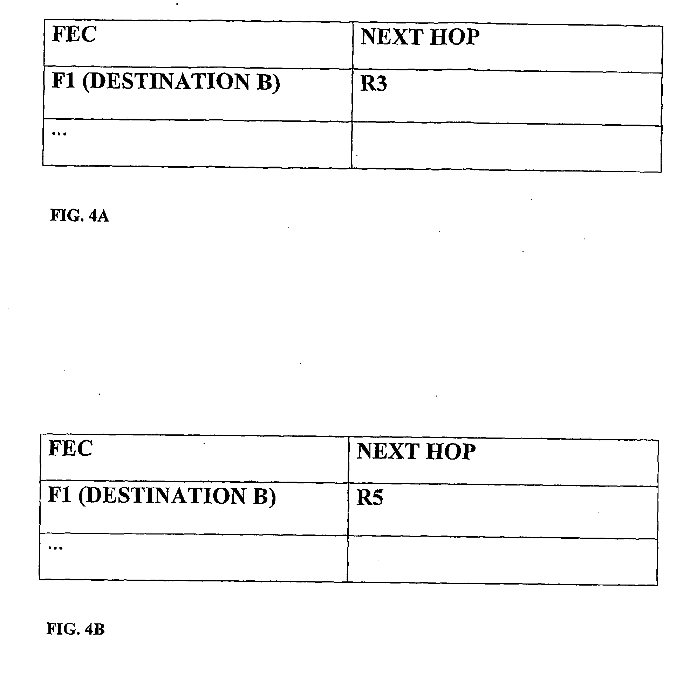

In step 302 the router identifies the topology from the T-IDm of the received label binding. Then at step 304 the router looks up the corresponding RIB for the topology and finds the next hop for FEC Fn. In particular, referring to FIGS. 4A and 4B which are diagrams showing the contents of the RIBs for each of topology 1 and topology 2 respectively it will be seen that the RIB contains the next hop in that topology for each FEC. It will be appreciated, of course, that according to the forwarding mechanism used, the next hop information can be, for example, in the form of the interface to the next hop, the next hop address or any other appropriate identifier. Accordingly, at step 306 the router obtains the next hop for the FEC in the respective topologies. Accordingly in topology 1, the next hop for FEC1 is R3 and for topology 2 the next hop is R5.

In step 306 router R2 populates in the single LFIB, in correspondence to the entry with the ingress label which has the label value advertised by R2 for the same <FEC, T-ID> tuple, a next hop which is the next hop for that FEC in the RIB corresponding to that T-ID, and an egress label which is the label received from the next hop router for that <FEC, T-IDi> tuple. For example referring to FIG. 5 it will be seen that for ingress label L_{R2}1, an egress label L_{R3}1 and a next hop R3 (or any appropriate corresponding identifier for the next hop) are introduced into the LFIB whereas for ingress label L_{R2}2, an egress label L_{R5}2 and a next hop R5 are inserted. A label advertised for FEC Fn by a router which is not the next hop RIB for T-IDm will not be used to populate the LFIB in correspondence to the entry with the ingress label advertised by R2 for that <FEC, T-ID> tuple. For example, referring to FIG.5, it will be seen that for ingress label L_{R2}1, the label L_{R5}1 advertised by router R5 for the same <FEC,T-ID> is not used to populate the LFIB since R5 is not the next hop for that FEC in the RIB for T-ID.

Referring now to FIG. 6, which is a flow diagram illustrating steps involved in forwarding packets according to the method described herein, at step 600 a packet is received. At step 602 a lookup is performed in the LFIB against the ingress label and at step 604 the label is swapped for the appropriate egress label and the packet is forwarded to the next hop identified in the LFIB. As a result of this approach classification of a given packet for the purpose of identifying the topology to use for forwarding it, is only required at the ingress router to the MPLS network (ingress Label Edge Router). The packet is then forwarded through the MPLS network according to its topology via label switching along the Label Switch Path established in accordance with the RIB of the corresponding topology. Of course it will be appreciated that any appropriate multi-topology routing mechanism can be implemented to determine the actual path and populate the RIBs.

It will be seen, on a given router, a given label value can not be bound to a given FEC in more than one topology. This ensures that the label values advertised for a given FEC in different topologies for a given router are distinguishable as a result of which the router can create two different ingress label entries in its single LFIB allowing the router to distinguish between different topologies.

It will further be seen that in relation to the ingress and egress label edge routers to the MPLS network R1, R4 respectively, the steps described above with reference to FIGS. 2 and 3 are implemented as appropriate. For example at the ingress router, incoming packets are received according to any appropriate protocol such as IGP or BGP and, as such, the ingress router will not carry out the label advertisement steps to upstream routers. However the ingress router will carry out appropriate steps to classify an incoming packet by topology, assign it to an FEC and attach the correct egress label received from each appropriate downstream router. In a similar manner the egress router will forward the packet according to any appropriate protocol such as IGP or BGP and so will not receive label advertisements from, or attach egress labels to, its downstream routers but will advertise its own labels to upstream routers. Accordingly a packet received at the egress label edge router may be forwarded to the next hop through an LFIB lookup keyed on its ingress label as per the appropriate forwarding mechanism and will have its >ingress label stack entry removed. For example, this may be the case when the egress label edge router advertises a different label for each <FEC, T-ID> tuple. Alternatively, the packet received at the egress label edge router may be forwarded to the next hop through a forwarding lookup based on information contained in the header of the transported packet (e.g. Destination address in the IP header) in which case the forwarding decision also involves classification of the packet for determination of the topology as per Multi-Topology Routing methods. For example, this may be the case when the egress label edge router advertises the Explicit-Null label for multiple <FEC, T-ID> tuples or advertises the use of Penultimate Hop Popping.

It will be appreciated that, as an alternative to extending the label distribution to advertising binding on a per <FEC,T-ID> tuple basis, a separate instance of label distribution protocol can be run per topology. In this case, one LDP instance would be run between neighbors per topology. Then the associated topology, i.e. T-IDm, can be inferred from the actual label distribution instance instead of being explicitly conveyed inside the label binding advertisement. For example, referring to Fig. 1, node R2 would receive labels L_{R3}1 and L_{R3}2 from R3 in separate LDP instances corresponding to topology 1 and topology 2 respectively. The method could then apply the steps shown in Fig. 3 where, at step 302, the router would identify the topology T-IDm as an inference from the LDP instance rather than from the label information itself. The rest of the steps shown in FIG. 3 could be repeated appropriately. In addition it will be seen that each node or router would advertise its own labels in the appropriate manner.

The mechanisms by which the method and optimizations discussed above are implemented will be well known to the skilled reader and do not require detailed discussion here. For example the manner in which the repair paths are computed, the MPLS labels pushed and exchanged and packets forwarded along the repair path can be implemented in any appropriate manner such as hardware or software and using for example micro-code.

In particular it will be seen that a single instance of the label distribution protocol can be used by extending the label distribution protocol to signal the topology associated with the label binding which modification can be made in any appropriate manner as will be known to the skilled reader. The method described herein can be implemented in any appropriate network for example on any IOS (Internet Operating System) and IOS-XR routers that support MPLS. On hardware platforms, support of the method described does not require hardware/firmware upgrade of the MPLS data path as it relies on the same label switching data path mechanism as existing MPLS forwarding. One possible use, for example, is to support an MPLS-VPN (Virtual Private Network) service using MTR to deploy class-based routing.

As a result of the approach described above class-based forwarding is supported in an MPLS network along class-based paths established by MTR routing even where MPLS label switching implementation is in non-modifiable hardware and without any modification to the MPLS label switching data path, requiring only control plane changes.

### 4.0 IMPLEMENTATION MECHANISMS -- HARDWARE OVERVIEW

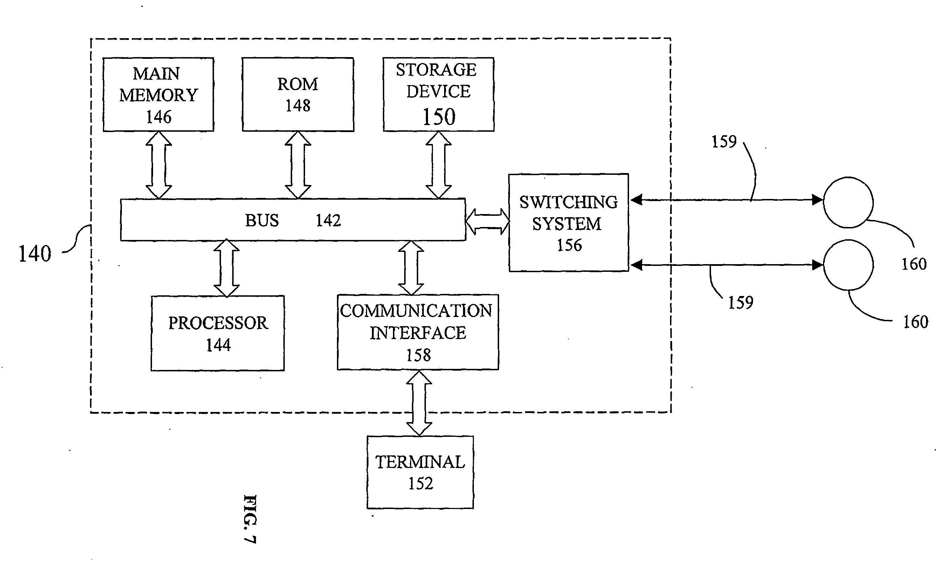

FIG. 7 is a block diagram that illustrates a computer system 40 upon which the method may be implemented. The method is implemented using one or more computer programs running on a network element such as a router device. Thus, in this embodiment, the computer system 140 is a router.

Computer system 140 includes a bus 142 or other communication mechanism for communicating information, and a processor 144 coupled with bus 142 for processing information. Computer system 140 also includes a main memory 146, such as a random access memory (RAM), flash memory, or other dynamic storage device, coupled to bus 142 for storing information and instructions to be executed by processor 144. Main memory 146 may also be used for storing temporary variables or other intermediate information during execution of instructions to be executed by processor 144. Computer system 140 further includes a read only memory (ROM) 148 or other static storage device coupled to bus 142 for storing static information and instructions for processor 144. A storage device 150, such as a magnetic disk, flash memory or optical disk, is provided and coupled to bus 142 for storing information and instructions.

A communication interface 158 may be coupled to bus 142 for communicating information and command selections to processor 144. Interface 158 is a conventional serial interface such as an RS-232 or RS-422 interface. An external terminal 152 or other computer system connects to the computer system 140 and provides commands to it using the interface 158. Firmware or software running in the computer system 140 provides a terminal interface or character-based command interface so that external commands can be given to the computer system.

A switching system 156 is coupled to bus 142 and has an input interface and a respective output interface (commonly designated 159) to external network elements. The external network elements may include a plurality of additional routers 160 or a local network coupled to one or more hosts or routers, or a global network such as the Internet having one or more servers. The switching system 156 switches information traffic arriving on the input interface to output interface 159 according to pre-determined protocols and conventions that are well known. For example, switching system 156, in cooperation with processor 144, can determine a destination of a packet of data arriving on the input interface and send it to the correct destination using the output interface. The destinations may include a host, server, other end stations, or other routing and switching devices in a local network or Internet.

The computer system 140 implements as a router acting as an enabling node the above described method of enabling routing. The implementation is provided by computer system 140 in response to processor 144 executing one or more sequences of one or more instructions contained in main memory 146. Such instructions may be read into main memory 146 from another computer-readable medium, such as storage device 150. Execution of the sequences of instructions contained in main memory 146 causes processor 144 to perform the process steps described herein. One or more processors in a multiprocessing arrangement may also be employed to execute the sequences of instructions contained in main memory 146. In alternative embodiments, hard-wired circuitry may be used in place of or in combination with software instructions to implement the method. Thus, embodiments are not limited to any specific combination of hardware circuitry and software.

The term "computer-readable medium" as used herein refers to any medium that participates in providing instructions to processor 144 for execution. Such a medium may take many forms, including but not limited to, non-volatile media, volatile media, and transmission media. Non-volatile media includes, for example, optical or magnetic disks, such as storage device 150. Volatile media includes dynamic memory, such as main memory 146. Transmission media includes coaxial cables, copper wire and fiber optics, including the wires that comprise bus 142. Transmission media can also take the form of wireless links such as acoustic or electromagnetic waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 144 for execution. For example, the instructions may initially be carried on a magnetic disk of a remote computer. The remote computer can load the instructions into its dynamic memory and send the instructions over a telephone line using a modem. A modem local to computer system 140 can receive the data on the telephone line and use an infrared transmitter to convert the data to an infrared signal. An infrared detector coupled to bus 142 can receive the data carried in the infrared signal and place the data on bus 142. Bus 142 carries the data to main memory 146, from which processor 144 retrieves and executes the instructions. The instructions received by main memory 146 may optionally be stored on storage device 150 either before or after execution by processor 144.

Interface 159 also provides a two-way data communication coupling to a network link that is connected to a local network. For example, the interface 159 may be an integrated services digital network (ISDN) card or a modem to provide a data communication connection to a corresponding type of telephone line. As another example, the interface 159 may be a local area network (LAN) card to provide a data communication connection to a compatible LAN. Wireless links may also be implemented. In any such implementation, the interface 159 sends and receives electrical, electromagnetic or optical signals that carry digital data streams representing various types of information.

The network link typically provides data communication through one or more networks to other data devices. For example, the network link may provide a connection through a local network to a host computer or to data equipment operated by an Internet Service Provider (ISP). The ISP in turn provides data communication services through the world wide packet data communication network now commonly referred to as the "Internet". The local network and the Internet both use electrical, electromagnetic or optical signals that carry digital data streams. The signals through the various networks and the signals on the network link and through the interface 159, which carry the digital data to and from computer system 140, are exemplary forms of carrier waves transporting the information.

Computer system 140 can send messages and receive data, including program code, through the network(s), network link and interface 159. In the Internet example, a server might transmit a requested code for an application program through the Internet, ISP, local network and communication interface 158. One such downloaded application provides for the method as described herein.

The received code may be executed by processor 144 as it is received, and/or stored in storage device 150, or other non-volatile storage for later execution. In this manner, computer system 140 may obtain application code in the form of a carrier wave.

### 5.0 EXTENSIONS AND ALTERNATIVES

It will be appreciated that the method described herein can be implemented for any combination of MPLS and MTR functionality, not limited to MPLS-VPN or class-based routing, for example allowing partitioning of a network into multiple topologies, one for voice and one for data while also providing an MPLS-VPN service. The method described can be implemented in relation to FECs defined in any appropriate manner, any form of label switched data and any form of RIB and LFIB derived or constructed according to any appropriate method. Furthermore any label distribution method can be implemented including downstream unsolicited/independent and downstream on-demand/independent without modification of the label distribution procedures.

In the foregoing specification, the invention has been described with reference to specific embodiments thereof. It will, however, be evident that various modifications and changes may be made thereto without departing from the scope of the invention. The specification and drawings are, accordingly, to be regarded in an illustrative rather than a restrictive sense.

Any appropriate routing protocol and mechanism can be adopted to implement the invention. The method steps set out can be carried out in any appropriate order and aspects from the examples and embodiments described juxtaposed or interchanged as appropriate.

Any appropriate implementation of MPLS and any appropriate label distribution protocol can be adopted to implement the invention. Similarly, where required, any appropriate link state protocol such as intermediate system-intermediate system (IS-IS) or open shortest path first (OSPF) can be implemented. Link state protocols of this type are well understood by the skilled reader and well documented in pre-existing documentation, and therefore are not described in detail here. Similarly any appropriate network can provide the platform for implementation of the method.

## Claims

1. A data packet routing apparatus configured to route label switched data packets in a Multi Protocol Label Switching, MPLS, network comprising a plurality of nodes and supporting multi topology routing, MTR, the data packet routing apparatus at a node within a topology in the MPLS network comprising:
one or more processors (144);
one or more network interfaces (158) coupled to the one or more processors (144) and the MPLS network;
logic coupled to the one or more processors and configured to process a label value advertisement comprising an association between a label value and a corresponding combination of a forwarding class and a topology identifier by populating a forwarding table with the label value as an ingress value together with a next-hop for the combination of forwarding class and topology identifier represented by that label value, wherein the label value is an MPLS label of a link that spans the node and a next-hop MPLS node adjacent to the node, and wherein the topology identifier identifies a topology in the MPLS network;
logic coupled to the one or more processors and configured to carry out routing enabling in relation to the label value advertisement thereby enabling, by assigning one different label value per topology, MTR-aware distribution.

2. The apparatus of claim 1 in which the node is an enabling node and further comprises logic configured to cause constructing the label value advertisement; and
wherein the logic configured to cause carrying out routing enabling further comprises logic configured to cause sending the label value advertisement to another node in the network.

3. The apparatus of claim 1 in which the node is a receiving node and further comprises logic configured to cause receiving the label value advertisement; and
wherein the logic configured to cause routing enabling further comprises logic configured to cause updating the forwarding table with the label value from the label value advertisement.

4. The apparatus of claim 3 further comprising logic configured to cause the receiving node to populate the forwarding table with next hop information derived from a routing table associated with the topology corresponding to the label value.

5. The apparatus of claim 4 further comprising logic configured to cause the receiving node to populate the forwarding table with a label value received from the corresponding next hop node.

6. The apparatus of claim 1 in which the label value advertisement comprises a binding between a label value and a corresponding forwarding equivalence class and topology.

7. The apparatus of claim 1 further comprising logic configured to cause processing a label value advertisement comprising an association between a label value and a corresponding forwarding class for a label switched path instance associated with the respective topology, and configured to cause carrying out a routing enabling step in relation to the label value advertisement.

8. A computer-implemented method of enabling routing of label switched data packets in a Multi Protocol Label Switching, MPLS, network comprising a plurality of nodes and supporting multi topology routing, MTR, the method comprising:
at a node within a topology in the MPLS network processing a label value advertisement comprising an association between a label value and a corresponding combination of a forwarding class and a topology identifier by populating a forwarding table with the label value as an ingress value together with a next-hop for the combination of forwarding class and topology identifier represented by that label value, wherein the label value is an MPLS label of a link that spans the node and a next-hop MPLS node adjacent to the node, and wherein the topology identifier identifies the topology in the MPLS network; and
carrying out a routing enabling step in relation to the label value advertisement thereby enabling, by assigning one different label value per topology, MTR-aware distribution..

9. A method as claimed in claim 8 in which the node is an enabling node and the step of processing the label value advertisement further comprises constructing the label value advertisement; and
the routing enabling step comprises sending the label value advertisement to another node in the network.

10. A method as claimed in claim 8 in which the node is a receiving node and the step of processing the label value advertisement further comprises receiving the label value advertisement; and
the routing enabling step comprises updating the forwarding table with the label value from the label value advertisement.

11. The method of claim 10 further comprising causing the receiving node to populate the forwarding table with next hop information derived from a routing table associated with the topology corresponding to the label value.

12. The method of claim 11 further comprising causing the receiving node to populate the forwarding table with a label value received from the corresponding next hop node.

13. The method of claim 8 in which the label value advertisement comprises a binding between a label value and a corresponding forwarding equivalence class and topology.

## Patentansprüche

1. Datenpaket-Routingvorrichtung, die dafür konfiguriert ist, Label-Switch-Datenpakete in einem Multiprotokoll-Label-Switching-Netzwerk, MPLS-Netzwerk, zu routen, das eine Vielzahl von Knoten umfasst und Multitopologie-Routing, MTR, unterstützt, wobei die Datenpaket-Routingvorrichtung an einem Knoten innerhalb einer Topologie im MPLS-Netzwerk Folgendes umfasst:
einen oder mehrere Prozessoren (144);
eine oder mehrere Netzwerkschnittstellen (158), die mit dem einen oder den mehreren Prozessoren (144) und dem MPLS-Netzwerk gekoppelt sind;
eine Logikschaltung, die mit dem einen oder den mehreren Prozessoren gekoppelt und dafür konfiguriert ist, eine Label-Wertanzeige zu verarbeiten, die eine Zuordnung zwischen einem Label-Wert und einer entsprechenden Kombination aus einer Weiterleitungsklasse und einer Topologiekennung umfasst, indem eine Weiterleitungstabelle mit dem Label-Wert als Eingangswert zusammen mit einem nächsten Knoten für die Kombination aus Weiterleitungsklasse und Topologiekennung, die durch diesen Label-Wert dargestellt wird, aufgefüllt wird, wobei der Label-Wert ein MPLS-Label einer Verknüpfung ist, die den Knoten und einen MPLS-Knoten eines nächsten Knotens benachbart zu dem Knoten überspannt, und wobei die Topologiekennung eine Topologie in dem MPLS-Netzwerk identifiziert;
eine Logikschaltung, die mit dem einen oder den mehreren Prozessoren gekoppelt und dafür konfiguriert ist, eine Routingaktivierung in Bezug auf die Label-Wertanzeige durchzuführen, wodurch eine MTR-bewusste Verteilung ermöglicht wird, indem ein einzelner anderer Label-Wert pro Topologie zugewiesen wird.

2. Vorrichtung nach Anspruch 1, wobei der Knoten ein Aktivierungsknoten ist und ferner eine Logikschaltung aufweist, die dafür konfiguriert ist, den Aufbau der Label-Wertanzeige zu verursachen; und
wobei die Logikschaltung, die dafür konfiguriert ist, die Durchführung der Routingaktivierung zu verursachen, ferner eine Logikschaltung umfasst, die dafür konfiguriert ist, das Senden der Label-Wertanzeige zu einem anderen Knoten in dem Netzwerk zu verursachen.

3. Vorrichtung nach Anspruch 1, wobei der Knoten ein Empfangsknoten ist und ferner eine Logikschaltung aufweist, die dafür konfiguriert ist, den Empfang der Label-Wertanzeige zu verursachen; und
wobei die Logikschaltung, die dafür konfiguriert ist, die Routingaktivierung zu verursachen, ferner eine Logikschaltung umfasst, die dafür konfiguriert ist, die Aktualisierung der Weiterleitungstabelle mit dem Label-Wert aus der Label-Wertanzeige zu veranlassen.

4. Vorrichtung nach Anspruch 3, die ferner eine Logikschaltung umfasst, die dafür konfiguriert ist, den Empfangsknoten zu veranlassen, die Weiterleitungstabelle mit Informationen zum nächsten Knoten aufzufüllen, die aus einer Weiterleitungstabelle abgeleitet werden, die der Topologie zugeordnet ist, die dem Label-Wert entspricht.

5. Vorrichtung nach Anspruch 4, die ferner eine Logikschaltung umfasst, die dafür konfiguriert ist, den Empfangsknoten zu veranlassen, die Weiterleitungstabelle mit einem Label-Wert aufzufüllen, der von dem entsprechenden Knoten des nächsten Knotens empfangen wird.

6. Vorrichtung nach Anspruch 1, wobei die Label-Wertanzeige eine Bindung zwischen einem Label-Wert und einer entsprechenden Weiterleitungsäquivalenzklasse und -topologie umfasst.

7. Vorrichtung nach Anspruch 1, die ferner eine Logikschaltung umfasst, die dafür konfiguriert ist, die Verarbeitung einer Label-Wertanzeige zu verursachen, die eine Zuordnung zwischen einem Label-Wert und einer entsprechenden Weiterleitungsklasse für eine Label-Switch-Pfadinstanz umfasst, die mit der jeweiligen Topologie verbunden ist, und dafür konfiguriert ist, die Durchführung eines Routingaktivierungsschritts in Bezug auf die Label-Wertanzeige zu veranlassen.

8. Computerimplementiertes Verfahren zur Routingaktivierung von Label-Switch-Datenpaketen in einem Multiprotokoll-Label-Switching-Netzwerk, MPLS-Netzwerk, das eine Vielzahl von Knoten umfasst und Multitopologie-Routing, MTR, unterstützt, wobei das Verfahren Folgendes umfasst:
an einem Knoten innerhalb einer Topologie im MPLS-Netzwerk Verarbeiten einer Label-Wertanzeige, die eine Zuordnung zwischen einem Label-Wert und einer entsprechenden Kombination aus einer Weiterleitungsklasse und einer Topologiekennung umfasst, indem eine Weiterleitungstabelle mit dem Label-Wert als Eingangswert zusammen mit einem nächsten Knoten für die Kombination aus Weiterleitungsklasse und Topologiekennung, die durch diesen Label-Wert dargestellt wird, aufgefüllt wird, wobei der Label-Wert ein MPLS-Label einer Verknüpfung ist, die den Knoten und einen MPLS-Knoten eines nächsten Knotens benachbart zu dem Knoten überspannt, und wobei die Topologiekennung die Topologie in dem MPLS-Netzwerk identifiziert; und
Durchführen eines Routingaktivierungsschritts in Bezug auf die Label-Wertanzeige, wodurch eine MTR-bewusste Verteilung ermöglicht wird, indem ein einzelner anderer Label-Wert pro Topologie zugewiesen wird.

9. Verfahren nach Anspruch 8, wobei der Knoten ein Aktivierungsknoten ist und der Schritt der Verarbeitung der Label-Wertanzeige ferner den Aufbau der Label-Wertanzeige umfasst; und
der Routingaktivierungsschritt das Senden der Label-Wertanzeige zu einem anderen Knoten in dem Netzwerk umfasst.

10. Verfahren nach Anspruch 8, wobei der Knoten ein Empfangsknoten ist und der Schritt der Verarbeitung der Label-Wertanzeige ferner den Empfang der Label-Wertanzeige umfasst; und
der Routingaktivierungsschritt die Aktualisierung der Weiterleitungstabelle mit dem Label-Wert aus der Label-Wertanzeige umfasst.

11. Verfahren nach Anspruch 10, das ferner das Veranlassen des Empfangsknotens umfasst, die Weiterleitungstabelle mit Informationen zum nächsten Knoten aufzufüllen, die aus einer Weiterleitungstabelle abgeleitet werden, die der Topologie zugeordnet ist, die dem Label-Wert entspricht.

12. Verfahren nach Anspruch 11, das ferner das Veranlassen des Empfangsknotens umfasst, die Weiterleitungstabelle mit einem Label-Wert aufzufüllen, der von dem entsprechenden Knoten des nächsten Knotens empfangen wird.

13. Verfahren nach Anspruch 8, wobei die Label-Wertanzeige eine Bindung zwischen einem Label-Wert und einer entsprechenden Weiterleitungsäquivalenzklasse und -topologie umfasst.

## Revendications

1. Appareil d'acheminement de paquets de données configuré à des fins d'acheminement de paquets de données à commutation d'étiquettes dans un réseau MPLS (multi protocol label switching - commutation multiprotocole par étiquette) comportant une pluralité de noeuds et prenant en charge le MTR (multi topology routing - acheminement multi-topologique), l'appareil d'acheminement de paquets de données au niveau d'un noeud au sein d'une topologie dans le réseau MPLS comportant :
un ou plusieurs processeurs (144) ;
une ou plusieurs interfaces de réseau (158) couplées auxdits un ou plusieurs processeurs (144) et au réseau MPLS ;
une logique couplée auxdits un ou plusieurs processeurs et configurée à des fins de traitement d'une annonce de valeur d'étiquette comportant une association entre une valeur d'étiquette et une combinaison correspondante constituée par une classe de transfert et un identifiant de topologie en garnissant une table de transfert au moyen de la valeur d'étiquette en tant que valeur d'entrée ainsi qu'un saut suivant pour la combinaison constituée par la classe de transfert et l'identifiant de topologie que représente cette valeur d'étiquette, dans lequel la valeur d'étiquette est une étiquette MPLS d'une liaison qui recouvre le noeud et un noeud MPLS de saut suivant adjacent au noeud, et dans lequel l'identifiant de topologie identifie une topologie dans le réseau MPLS ;
une logique couplée auxdits un ou plusieurs processeurs et configurée à des fins d'exécution d'une validation d'acheminement en fonction de l'annonce de valeur d'étiquette pour ainsi valider, en affectant une valeur d'étiquette différente par topologie, une distribution sensible au MTR.

2. Appareil selon la revendication 1, dans lequel le noeud est un noeud de validation et comporte par ailleurs une logique configurée pour entraîner la construction de l'annonce de valeur d'étiquette ; et
dans lequel la logique configurée pour entraîner l'étape consistant à effectuer une validation d'acheminement comporte par ailleurs une logique configurée pour entraîner l'envoi de l'annonce de valeur d'étiquette à un autre noeud dans le réseau.

3. Appareil selon la revendication 1, dans lequel le noeud est un noeud de réception et comporte par ailleurs une logique configurée pour entraîner la réception de l'annonce de valeur d'étiquette ; et
dans lequel la logique configurée pour entraîner la validation d'acheminement comporte par ailleurs une logique configurée pour entraîner la mise à jour de la table de transfert au moyen de la valeur d'étiquette en provenance de l'annonce de valeur d'étiquette.

4. Appareil selon la revendication 3, comportant par ailleurs une logique configurée pour entraîner le noeud de réception à garnir la table de transfert au moyen des informations de saut suivant dérivées en provenance d'une table de transfert associée à la topologie correspondant à la valeur d'étiquette.

5. Appareil selon la revendication 4, comportant par ailleurs une logique configurée pour entraîner le noeud de réception à garnir la table de transfert au moyen d'une valeur d'étiquette reçue en provenance du noeud de saut suivant correspondant.

6. Appareil selon la revendication 1, dans lequel l'annonce de valeur d'étiquette comporte un lien entre une valeur d'étiquette et une topologie et une classe d'équivalence de transfert correspondantes.

7. Appareil selon la revendication 1, comportant par ailleurs une logique configurée pour entraîner le traitement d'une annonce de valeur d'étiquette comportant une association entre une valeur d'étiquette et une classe de transfert correspondante pour une instance de chemin d'accès à commutation d'étiquettes associée à la topologie respective, et configurée pour entraîner l'exécution d'une étape consistant à valider l'acheminement en fonction de l'annonce de valeur d'étiquette.

8. Procédé exécutable par ordinateur permettant de valider l'acheminement de paquets de données à commutation d'étiquettes dans un réseau MPLS (multi protocol label switching - commutation multiprotocole par étiquette) comportant une pluralité de noeuds et prenant en charge le MTR (multi topology routing - acheminement multi-topologique), le procédé comportant :
au niveau d'un noeud au sein d'une topologie dans le réseau MPLS l'étape consistant à traiter une annonce de valeur d'étiquette comportant une association entre une valeur d'étiquette et une combinaison correspondante constituée par une classe de transfert et un identifiant de topologie en garnissant une table de transfert au moyen de la valeur d'étiquette en tant que valeur d'entrée ainsi qu'un saut suivant pour la combinaison constituée par la classe de transfert et l'identifiant de topologie que représente cette valeur d'étiquette, dans lequel la valeur d'étiquette est une étiquette MPLS d'une liaison qui recouvre le noeud et un noeud MPLS de saut suivant adjacent au noeud, et dans lequel l'identifiant de topologie identifie la topologie dans le réseau MPLS ; et
l'étape consistant à effectuer une étape de validation d'acheminement en fonction de l'annonce de valeur d'étiquette pour ainsi valider, en affectant une valeur d'étiquette différente par topologie, une distribution sensible au MTR.

9. Procédé selon la revendication 8, dans lequel le noeud est un noeud de validation et l'étape consistant à traiter l'annonce de valeur d'étiquette comporte par ailleurs la construction de l'annonce de valeur d'étiquette ; et
l'étape consistant à valider l'acheminement comporte l'envoi de l'annonce de valeur d'étiquette à un autre noeud dans le réseau.

10. Procédé selon la revendication 8, dans lequel le noeud est un noeud de réception et l'étape consistant à traiter l'annonce de valeur d'étiquette comporte par ailleurs la réception de l'annonce de valeur d'étiquette ; et
l'étape consistant à valider l'acheminement comporte la mise à jour de la table de transfert au moyen de la valeur d'étiquette en provenance de l'annonce de valeur d'étiquette.

11. Procédé selon la revendication 10, comportant par ailleurs l'étape consistant à entraîner le noeud de réception à garnir la table de transfert au moyen des informations de saut suivant dérivées en provenance d'une table de transfert associée à la topologie correspondant à la valeur d'étiquette.

12. Procédé selon la revendication 11, comportant par ailleurs l'étape consistant à entraîner le noeud de réception à garnir la table de transfert au moyen d'une valeur d'étiquette reçue en provenance du noeud de saut suivant correspondant.

13. Procédé selon la revendication 8, dans lequel l'annonce de valeur d'étiquette comporte un lien entre une valeur d'étiquette et une topologie et une classe d'équivalence de transfert correspondantes.
